(19) 

Europäisches Patentamt
European Patent Office
Office européen des brevets

(11) **EP 3 747 529 A1**

(12) **EUROPEAN PATENT APPLICATION**

(43) Date of publication:
**09.12.2020 Bulletin 2020/50**

(51) Int Cl.:
**B01D 53/00** *(2006.01)* **B01D 53/04** *(2006.01)*
**B01D 53/22** *(2006.01)*

(21) Application number: **20175333.2**

(22) Date of filing: **19.05.2020**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2019 JP 2019095129**

</td><td>

(71) Applicant: **Ushio Denki Kabushiki Kaisha**
**Tokyo-to**
**100-8150 (JP)**

(72) Inventor: **NAITO, Keisuke**
**Tokyo, Tokyo 100-8150 (JP)**

(74) Representative: **Tomerius, Isabel**
**Lang & Tomerius**
**Patentanwaltspartnerschaft mbB**
**Rosa-Bavarese-Strasse 5**
**80639 München (DE)**

</td></tr>
</table>

(54) **GAS TREATMENT DEVICE**

(57)    To realize a gas treatment device that hardly loses its treatment capacity over time. A gas treatment device performs a treatment to a gas to be treated that is a mixture of air and a VOC flowing through a treatment chamber. The device includes a first filter disposed inside the treatment chamber and configured to be able to adsorb a first substance belonging to VOCs in a gaseous form, and an excimer lamp disposed closer to the exhaust port than the first filter and irradiating the gas to be treated with ultraviolet after the gas to be treated has passed through the first filter to allow a second substance belonging to VOCs to be decomposed. The first substance has a higher adsorbability to the first filter in a gaseous form and a higher aerosol formation potential when irradiated with ultraviolet than the second substance.

Fig. 1

EP 3 747 529 A1

**Description**

BACKGROUND OF THE INVENTION

Field of the Invention

The present invention relates to a gas treatment device, and more particularly to a gas treatment device for treating a gas to be treated containing VOCs (Volatile Organic Compounds).

Description of the Related Art

Gases that can affect the global environment and the human body have been an issue in recent years, and certain regulations are imposed on exhaust gases from automobiles and factories. Regulations are imposed on VOC emissions also in many indoor applications where specified pharmaceuticals may be used, such as test facilities and clinical settings.

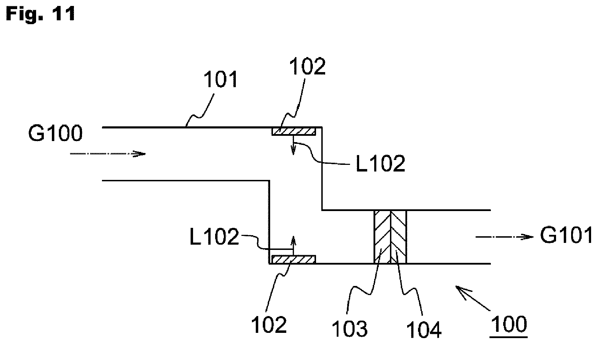

Patent Document 1 specified below discloses a gas treatment device that treats a gas to be treated by irradiating air containing VOCs with ultraviolet. Fig. 11 is a drawing illustrating a schematic configuration of the gas treatment device disclosed in Patent Document 1. As illustrated in Fig. 11, the gas treatment device 100 includes a flow path 101 for VOC-containing air G100 that is the object of treatment to flow through, an ultraviolet light source 102 disposed inside the flow path, a particulate filter 103, and an ozone-decomposing filter 104.

The following description is found in Patent Document 1. Irradiation of the VOC-containing air to be treated G100 that flows through the flow path 101 with ultraviolet L102 having a wavelength of 185 nm from the ultraviolet light source 102 produces ozone ($O_3$) from the oxygen ($O_2$) contained in the air G100. This ozone accelerates chemical reactions of VOCs, whereby particles of secondary product are generated. The secondary product particles are removed by the particulate filter 103 disposed downstream of the ultraviolet light source 102. The ozone that was generated by ultraviolet L102 irradiation is removed by the ozone-decomposing filter 104 disposed downstream of the ultraviolet light source 102. The treated air G101 after passing through both filters (103, 104) is thus cleared of VOCs.

Patent Document 1 mentions toluene, xylene, and ethyl acetate as examples of VOCs.

Prior Art Document

Patent Document

Patent Document 1: JP-A-2018-89106

SUMMARY OF THE INVENTION

Substances that belong to VOCs include types that hardly form particles when irradiated with ultraviolet and that can hardly be broken down even by ozone, such as formaldehyde. If the air to be treated G100 contains formaldehyde, for example, the gas treatment device 100 described in Patent Document 1 is not able to remove formaldehyde sufficiently. The gas treatment device 100 therefore will exhaust the treated air G101, from which formaldehyde is not fully removed, which is undesirable.

The inventor investigated a method of decomposing formaldehyde using the gas treatment device 100 illustrated in Fig. 11, wherein a xenon excimer lamp was used as the ultraviolet light source 102 to irradiate the air to be treated G100 with ultraviolet L102 having shorter wavelengths so that hydroxyl radicals ($\cdot$OH) that are more reactive than ozone are generated to be used for decomposition of formaldehyde. It was found, however, that this method entailed the problem of contaminants deposited on the wall of the arc tube (tube body) of the excimer lamp, which is used as the ultraviolet light source 102, as the treatment of the air G100 progresses, resulting in lowered illuminance of the ultraviolet L102. This phenomenon lowers the radical formation potential and compromises the VOC decomposition capability, which is not preferable.

In view of the problems described above, an object of the present invention is to realize a gas treatment device that performs a treatment to a flowing gas to be treated, which is air containing a VOC, the device being capable of treating even a gas containing a substance that is hardly decomposed by ozone, and capable of keeping treatment capacity over time.

The present invention provides a gas treatment device performing a treatment to a gas to be treated that is a mixture of air and a VOC flowing through a treatment chamber. The device includes:

an intake port allowing the gas to be treated to be introduced into the treatment chamber;

an exhaust port allowing the gas to be treated to be exhausted after being treated inside the treatment chamber;

a first filter disposed inside the treatment chamber and configured to be able to adsorb a first substance belonging to VOCs in a gaseous form; and

an excimer lamp disposed closer to the exhaust port than the first filter inside the treatment chamber and irradiating the gas to be treated with ultraviolet after the gas to be treated has passed through the first filter to allow a second substance belonging to VOCs to be decomposed.

The first substance has a higher adsorbability to the first filter in a gaseous form and a higher aerosol formation potential when irradiated with the ultraviolet than the second substance.

The phrase "aerosol formation potential" herein is defined as the yield of secondary organic aerosols (SOAs) per unit amount of consumed VOC, and used as the index of how readily SOA is generated for each substance that forms a VOC. More specifically, the yield is defined by the value Y as expressed by the following Formula (1). In Formula (1), Mo represents the aerosol concentration [$\mu g/m^3$], and $\Delta VOC$ represents the amount of VOC [ppb] consumed in the (photochemical) reaction.

$$Y = M_0/\Delta VOC \cdots (1)$$

In the configuration above, a first filter is disposed closer to the intake port than the excimer lamp, i.e., upstream, inside the treatment chamber. Therefore, when a gas that is air containing a first substance and a second substance that belong to VOCs is introduced from the intake port into the treatment chamber as the gas to be treated, this gas passes through the first filter before irradiated with ultraviolet from the excimer lamp. As a result, the first substance contained in the gas to be treated is adsorbed by the first filter, and the gas to be treated with a much reduced concentration of the first substance is irradiated with the ultraviolet from the excimer lamp.

Therefore, even if the first substance is a substance that shows a high aerosol formation potential when irradiated with ultraviolet, by the time the gas to be treated passes near the excimer lamp, the first substance has already been removed, so that adhesion of aerosol particles originating from the first substance on the tube body of the excimer lamp is inhibited.

In cases where the second substance is a substance with a low adsorbability, i.e., hardly removable by the first filter, the gas to be treated after having passed through the first filter still contains the second substance therein. However, this gas to be treated is irradiated with the ultraviolet from the excimer lamp, so that the second substance is decomposed by radicals generated when the oxygen contained in the gas to be treated is decomposed. As a result, the concentrations of both the first substance and the second substance can be reduced before the air is exhausted from the exhaust port.

Since adhesion of aerosol particles originating from the first substance on the tube wall of the arc tube of the excimer lamp is inhibited as described above, the illuminance of ultraviolet emitted from the excimer lamp hardly declines as time passes. Consequently, a decline over time in the capacity to treat VOCs contained in the gas to be treated is inhibited.

The first filter is configured as a gas adsorption filter that includes a porous adsorbent such as, for example, activated carbon, zeolite, silica gel, and so on.

The first substance may either contain a phenyl group or belong to alkyl chlorides, and the second substance may belong to any one of alcohols, ketones, aldehydes, and epoxides.

For example, the first substance may be one or more of substances included in the group consisting of toluene, xylene, styrene, ethyl benzene, chloroform, and carbon tetrachloride, and the second substance may be one or more of substances included in the group consisting of formaldehyde, ethylene oxide, methanol, isopropyl alcohol, acetone, methyl ethyl ketone, and methyl isobutyl ketone.

The excimer lamp may include an arc tube hermetically filled with a discharge gas containing Xe and arranged longitudinally along a direction in which the gas to be treated flows.

With this configuration, the excimer lamp emits ultraviolet having a peak wavelength of 160 nm or more and less than 200 nm to irradiate the gas to be treated. This enhances the formation efficiency of hydroxyl radicals (·OH) that are particularly reactive, and this way, a gas treatment device with excellent capability to decompose the second substance is realized. The excimer lamp is disposed inside the treatment chamber such that the arc tube in the excimer lamp extends longitudinally along the direction in which the gas to be treated flows, so that the gas to be treated flowing through the treatment chamber can be irradiated with ultraviolet over a length of time required for the gas to be treated to move a distance corresponding to the length of the tube body (more particularly, emission length). This allows the gas to be treated to be irradiated with a sufficient amount of ultraviolet so that a high concentration of radicals including hydroxyl radicals (·OH) are generated to contribute to decomposition of the second substance.

The gas treatment device may further include a second filter disposed closer to the exhaust port than the excimer lamp inside the treatment chamber and capable of decomposing ozone.

Irradiation of the gas to be treated with the ultraviolet from the excimer lamp produces radicals such as hydroxyl radicals (·OH) as well as ozone ($O_3$). This ozone is less reactive than radicals and may be left in the gas to be treated and discharged from the exhaust port. Since ozone is a substance hazardous to the human body, it is preferable to reduce the concentration of ozone emission to the outside of the gas treatment device.

In the configuration above, a second filter is disposed closer to the exhaust port than the excimer lamp, i.e., downstream of the excimer lamp. Therefore, the ozone generated when the gas to be treated is irradiated with ultraviolet from the excimer lamp is decomposed by the second filter, so that the air discharged from the exhaust port contains a low concentration of ozone, as well as a low concentration of VOCs.

For the second filter, structures wherein a catalyst is carried on a base member having a honeycomb structure made of metal such as aluminum and stainless steel, or ceramics, may be employed. For the catalyst, rare metal catalysts such as palladium (Pd), rhodium (Rh), platinum (Pt) and the like, or metal oxides such as manganese dioxide ($MnO_2$), iron (II) oxide ($Fe_2O_3$), nickel oxide (NiO) and the like may be used.

The gas treatment device may further include an ozone-resistant third filter disposed closer to the intake port than the first filter inside the treatment chamber and capable of adsorbing dust contained in the gas to be treated.

There may be cases where the gas to be treated introduced from the intake port initially contains dust particles. By providing the third filter closer to the intake port than the first filter, i.e., upstream, inside the treatment chamber, the dust can be removed upstream of the first filter. For the third filter, a medium efficiency particulate air filter may be used, for example. A "medium efficiency particulate air filter" means a filter that has a medium level particulate filtration efficiency to particulates primarily of a particle size of 0.5 pm or more and less than 5 pm, i.e., a filter having a filtration efficiency of 50% to less than 95% as measured by a dust spot method (JIS B 9908).

The gas treatment device may further include a circulation flow path that introduces at least part of the gas to be treated that has passed through the second filter to a point between the third filter and the intake port.

The air containing VOCs, or the gas to be treated, is treated as described above, wherein the first filter removes the first substance, which is a type of VOC, and radicals generated by ultraviolet radiation from the excimer lamp decompose the second substance, which is another type of VOC. Depending on the place where the gas treatment device is installed, however, there can be a case where the concentration of VOCs contained in the air discharged from the exhaust port is desired to be even lower than a value set in accordance with common environmental standards.

According to the configuration described above, the gas treatment device includes a circulation flow path, so that the air that has undergone the process of removing VOCs in the treatment chamber can be guided again to the first filter and excimer lamp through the circulation flow path. The air can thus be passed through the first filter a number of times to remove the first substance in the air even more, and can be irradiated with ultraviolet from the excimer lamp a number of times to remove the second substance in the air even more.

Irradiation of the air or the gas to be treated with ultraviolet from the excimer lamp generates not only radicals but also ozone, as described above. While the second filter is disposed downstream of the excimer lamp for decomposing the ozone, the ozone contained in the gas to be treated may not necessarily be entirely decomposed, and part of the ozone may possibly pass through the second filter. This can occur easily in particular in a case where the gas to be treated flows fast.

In such a case, if the gas treatment device includes the circulation flow path, the gas to be treated containing ozone is guided toward the third filter mentioned above. If the third filter is an air filter that is not resistant to ozone, there is a risk that the third filter may be damaged by the ozone, in which case the substances making up the third filter may adhere to the tube wall of the arc tube of the excimer lamp. In this respect, the configuration described above prevents such damage caused by ozone, since the third filter is ozone-resistant.

The third filter, specifically, is a non-woven fabric filter made of polyester fiber, fluoride fiber, glass fiber, and the like.

The gas treatment device may further include an ozone-resistant fourth filter disposed between the first filter and the excimer lamp inside the treatment chamber and capable of adsorbing dust contained in the gas to be treated.

The present invention realizes a gas treatment device capable of treating a gas to be treated even when the gas contains a substance belonging to VOCs that is hardly decomposed by ozone, and capable of keeping treatment capacity over time.

BRIEF DESCRIPTION OF THE DRAWINGS

Fig. 1 is a drawing illustrating a schematic configuration of a first embodiment of the gas treatment device;

Fig. 2 is a drawing illustrating a schematic configuration of only the surroundings of an excimer lamp inside a light-emitting chamber;

Fig. 3 is a schematic cross-sectional view of the excimer lamp illustrated in Fig. 2 cut in a plane orthogonal to the direction d1;

Fig. 4 is a graph showing changes with time in the illuminance on the surface of the tube body of the excimer lamp in the gas treatment devices of Examples and Comparative Examples;

Fig. 5 is a drawing illustrating a schematic configuration of the gas treatment device of Comparative Examples;

Fig. 6 is a drawing illustrating a schematic configuration of a second embodiment of the gas treatment device;

Fig. 7 is a drawing illustrating a schematic configuration of the gas treatment device in another embodiment;

Fig. 8 is a drawing illustrating a schematic configuration of the gas treatment device in another embodiment;

Fig. 9 is a schematic cross-sectional view of the excimer lamp in a gas treatment device of another embodiment cut in a plane orthogonal to the direction d1;

Fig. 10 is a schematic cross-sectional view of the excimer lamp in a gas treatment device of another embodiment cut in a plane orthogonal to the direction d1; and

Fig. 11 is a drawing illustrating a schematic configuration of an existing gas treatment device.

DETAILED DESCRIPTION OF THE PREFERRED EMBODIMENTS

Embodiments of the gas treatment device according to the present invention will be described with reference to applicable drawings. The drawings referred to below each present a schematic illustration and the dimensional ratios in the drawings are not necessarily the same as the actual dimensional ratios. The dimensional ratios in various figures of the drawings are not necessarily the same, either.

[First Embodiment]

A first embodiment of a gas treatment device according to the present invention will be described below with reference to applicable drawings.

«Structure»

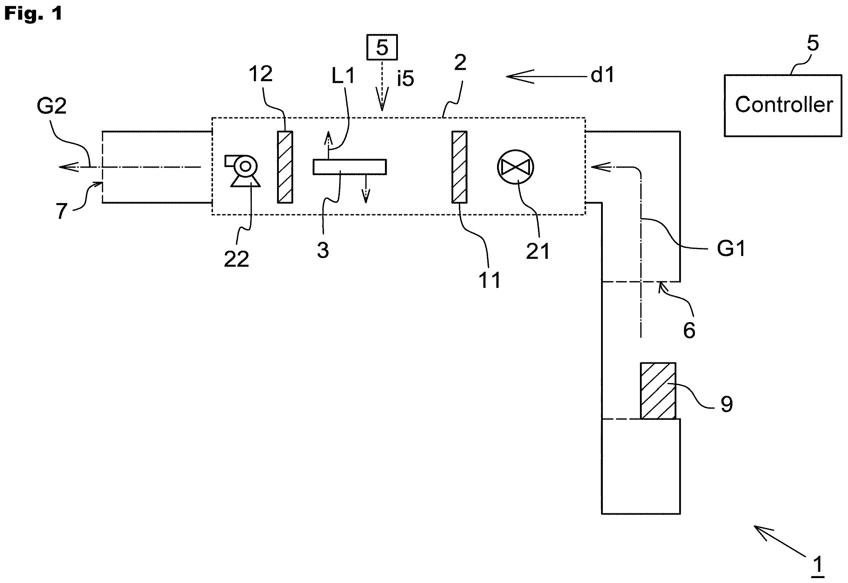

Fig. 1 is a drawing illustrating a schematic configuration of a first embodiment of the gas treatment device. The gas treatment device 1 illustrated in Fig. 1 includes a treatment chamber 2 for gases to flow through, to perform a treatment to a gas to be treated G1 flowing through this treatment chamber 2 and to exhaust the gas as treated gas G2.

The gas treatment device 1 includes an intake port 6 for introducing a gas to be treated G1 into the treatment chamber 2, and an exhaust port 7 for exhausting the gas (treated gas G2) after the treatment performed to the gas to be treated G1 in the treatment chamber 2.

The gas treatment device 1 is used for gas treatment applications where the gas to be treated G1 is a mixture of air and VOCs. VOCs herein collectively refer to organic compounds that are volatile and become gases in the atmosphere, or a group of substances including but not limited to formaldehyde, methanol, IPA (isopropyl alcohol), acetone, ethylene oxide, toluene, xylene, and ethyl acetate.

In test facilities or clinical settings, for example, tissues or the like may be stored in a container filled with a formaldehyde solution (formalin) and securely positioned therein. When the lid of such a container is opened, it is expected that the highly volatile formaldehyde evaporates, resulting in the surrounding atmosphere containing formaldehyde which is a type of VOC. In some cases, the formaldehyde solution in the tissue storage container may also contain a small amount of other VOC substances such as methanol. In such cases, not only formaldehyde but also other VOC substances will also be present in the air after the lid of the container has been opened.

Generally, in test facilities or clinical settings, pharmaceuticals containing VOC substances such as formaldehyde or xylene may be used not just for the purpose of storing tissues. In Fig. 1, reference numeral 9 represents a VOC emission source that is typically such a container or pharmaceutical. Hereinafter this will be referred to as "VOC emission source 9".

In this embodiment, the treatment chamber 2 includes therein a first filter 11, a second filter 12, an excimer lamp 3, a valve 21, and a blower 22.

The gas treatment device 1 includes a controller 5 for controlling the valve 21 and blower 22. The degree of opening of the valve 21 and the operation of the blower 22 are controlled based on control signals i5 from the controller 5. By controlling these valve 21 and blower 22, the flow amount and the flow rate of the gas to be treated G1 flowing through the treatment chamber 2 are adjusted.

When it is only necessary to control whether or not the gas to be treated G1 is allowed to flow through the treatment chamber 2, the blower 22 may be omitted and the valve 21 alone may be provided. The valve 21 and blower 22 may be manually controlled by an operator, rather than the control based on control signals i5 from the controller 5.

While the valve 21 is depicted to be located closer to the intake port 6 than the blower 22, i.e., upstream in Fig. 1, the positional relationship between the valve 21 and the blower 22 may be freely determined.

In the following description, it is assumed that both the valve 21 and blower 22 are provided inside the treatment chamber 2.

The gas treatment device 1 includes the first filter 11, second filter 12, and excimer lamp 3 inside the treatment chamber 2. As illustrated in Fig. 1, the first filter 11 is disposed closer to the intake port 6 than the excimer lamp 3, i.e., upstream, and the second filter 12 is disposed closer to the exhaust port 7 than the excimer lamp 3, i.e., downstream.

The first filter 11 is a gas adsorption filter configured to be able to adsorb a first substance Z1 that belongs to VOCs in a gaseous form, and includes a porous adsorbent such as, for example, activated carbon, zeolite, silica gel, and so on. Examples of this first substance Z1 include substances containing the phenyl group such as toluene, xylene, styrene, and ethyl benzene, and substances that belong to alkyl chlorides such as chloroform, carbon tetrachloride, and so on.

The gas to be treated G1 introduced from the intake port 6 is guided to the first filter 11. Any first substance Z1 that belongs to VOCs contained in the gas to be treated G1 is adsorbed and removed by the first filter 11. Consequently the concentration of the first substance Z1 contained in the gas to be treated G1 is lowered.

Substances that belong to VOCs include substances that are hardly adsorbed by gas adsorption filters such as the first filter 11 mentioned above, and substances that are readily released even after adsorbed by the gas adsorption filter (hereinafter referred to as "second substance Z2"). Examples of this second substance Z2 include aldehydes such as formaldehyde, epoxides such as ethylene oxide, alcohols such as methanol and isopropyl alcohol, and ketones such as acetone, methyl ethyl ketone, and methyl isobutyl ketone. The second substance Z2 has a higher saturation vapor pressure and a higher hydrophilicity than the first substance Z1. When a second substance Z2 is contained in the gas to be treated G1, the gas to be treated G1 shows a high concentration of the contained second substance Z2 even after passing through the first filter 11. After passing through the first filter 11, the gas to be treated G1 is guided as it is, i.e., with the high concentration of the contained second substance Z2, to the area where the excimer lamp 3 is disposed.

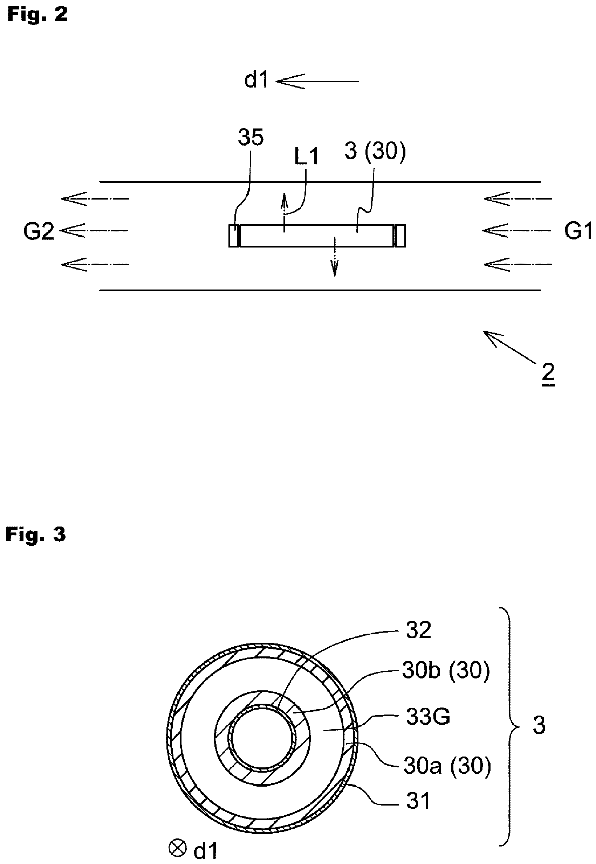

The excimer lamp 3 has an arc tube 30 arranged longitudinally along the direction d1 in which the gas to be treated G1 flows (see Fig. 2). Fig. 2 is a drawing illustrating a schematic configuration of only the surroundings of the excimer lamp 3 inside a treatment chamber 2. Fig. 3 is a schematic cross-sectional view of the excimer lamp 3 illustrated in Fig. 2 cut in a plane orthogonal to the direction d1.

In this embodiment, the excimer lamp 3 has the arc tube 30 extending along the direction d1. More specifically, this arc tube 30 has an outer tube 30a that is cylindrical and positioned outside, and a cylindrical inner tube 30b disposed inside the outer tube 30a, coaxial with the outer tube 30a, and having a smaller inside diameter than that of the outer tube 30a. Both arc tubes 30 (30a, 30b) are made of a dielectric material such as synthetic quartz glass.

The outer tube 30a and inner tube 30b are sealed at the ends in the direction d1 (not shown), so that between the tubes there is formed a light-emitting chamber that is annular when viewed from the direction d1. A discharge gas 33G that generates excimer molecules by an electric discharge is sealed in this light-emitting chamber. A more specific example of the discharge gas 33G is a gas mixture containing xenon (Xe) and neon (Ne) in a predetermined ratio (of, for example, 3:7), which may or may not further include a small amount of oxygen or hydrogen.

The excimer lamp 3 of this embodiment includes a first electrode 31 set on an outer wall surface of the outer tube 30a, and a second electrode 32 set on an inner wall surface of the inner tube 30b. The first electrode 31 is in the form of a mesh or a wire. The second electrode 32 is in the form of a film. The second electrode 32 may also be in the form of a mesh or wire similar to the first electrode 31.

In the example illustrated in Fig. 2, the excimer lamp 3 has a base part 35 at one end in the direction d1 of the arc tube 30. This base part 35 is made of a ceramic material (inorganic material) such as steatite, forsterite, sialon, alumina, and the like, and serves the function of securing the end of the arc tube 30. Power supply lines (not shown) are each connected to the electrodes (31, 32) through a hole portion provided to the base part 35 or via an outer edge of the base part 35.

When a high-frequency AC voltage of about 50 kHz to 5 MHz, for example, is applied between the first electrode 31 and the second electrode 32 via the power supply lines from a lamp power source (not shown) of the excimer lamp 3, this voltage is applied to the discharge gas 33G via the arc tube 30. This generates a discharge plasma inside the discharge chamber filled with the discharge gas 33G, and excited atoms of the discharge gas 33G form excimers, which, when transiting to the ground state, emit light. In the case where a gas containing xenon (Xe) mentioned above is used as the discharge gas 33G, the excimer emits ultraviolet L1 (see Fig. 2) that has a peak wavelength near 172 nm.

The wavelength of the ultraviolet L1 can be changed by using a different substance for the discharge gas 33G. For example, ArBr, ArCl, and $F_2$ can be used for the discharge gas 33G, which respectively produce light with a peak wavelength near 165 nm, 175 nm, and 153 nm. The description here assumes that the discharge gas 33G is a gas that contains Xe.

The ultraviolet L1 emitted from the excimer lamp 3 having a peak wavelength of around A nm herein shall mean that the peak wavelength of the ultraviolet L1 is ($\lambda$ - 2) nm or more and ($\lambda$ + 2) nm or less.

As described above, the first electrode 31 has a mesh or wire form so as not to inhibit emission of the ultraviolet L1 generated inside the arc tube 30 (more specifically, light-emitting chamber) out of the arc tube 30. Thus the ultraviolet L1 is emitted out of the arc tube 30 through the gaps of the first electrode 31.

The lamp power source of the excimer lamp 3 may also be controlled based on the control signal i5 from the controller 5.

Irradiation of the gas to be treated G1 containing VOCs flowing through the treatment chamber 2 with the ultraviolet L1 from the excimer lamp 3 generates highly reactive oxygen atoms $O(^1D)$ and hydroxyl radicals ($\cdot OH$) by the reactions expressed by the following Formulas (2) and (3). In the following formulas, $O(^1D)$ represents oxygen atoms in the excited state, and $O(^3P)$ represents oxygen atoms in the ground state. $hv(\lambda)$ indicates absorption of light of a wavelength $\lambda$.

$$O_2 + hv(\lambda) \rightarrow O(^1D) + O(^3P) \ .... \qquad (2)$$

$$O(^1D) + H_2O \rightarrow \cdot OH + \cdot OH \ .... \qquad (3)$$

Oxygen atoms $O(^3P)$ generated by the reaction of Formula (2) react with the oxygen ($O_2$) contained in the gas to be treated G1 and generate ozone ($O_3$) by the reaction expressed by the following Formula (4).

$$O(^3P) + O_2 \rightarrow O_3 \ .... \qquad (4)$$

Namely, the gas to be treated G1 irradiated with the ultraviolet L1 produces highly reactive hydroxyl radicals ($\cdot OH$). The second substance Z2 that was not removed by the first filter 11 is therefore decomposed by the hydroxyl radicals ($\cdot OH$), so that the concentration of the second substance Z2 contained in the gas to be treated G1 is reduced. If the gas to be treated G1 flowing near the excimer lamp 3 contains a VOC that can be decomposed by the ozone ($O_3$), this VOC is decomposed by the ozone ($O_3$) generated by the reaction expressed by Formula (4) above.

As mentioned above with reference to Fig. 2, the gas to be treated G1 flows along the longitudinal direction of the arc tube 30, i.e., along the axis of the tube. This secures a certain time in which the gas to be treated G1 is irradiated with the ultraviolet L1 emitted from the arc tube 30 (excimer lamp 3). Accordingly, the gas to be treated G1 can be irradiated with a sufficient amount of ultraviolet L1 so that the VOC contained in the gas to be treated G1 can be decomposed even though the gas treatment device 1 has just one excimer lamp 3.

After the concentrations of the first substance Z1 and the second substance Z2 have been lowered, the gas to be treated G1 is guided toward the second filter 12. The second filter 12 is a filter that can decompose ozone, for which structures wherein a catalyst is carried on a base member having a honeycomb structure made of metal such as aluminum and stainless steel, or ceramics, may be employed. For the catalyst, rare metal catalysts such as palladium (Pd), rhodium (Rh), platinum (Pt) and the like, or metal oxides such as manganese dioxide ($MnO_2$), iron (II) oxide ($Fe_2O_3$), nickel oxide (NiO) and the like may be used.

As mentioned above, there may be a case where the gas to be treated G1 after irradiated with the ultraviolet L1 from the excimer lamp 3 contains the ozone ($O_3$) that has been generated by the reaction expressed by Formula (4) above. In the gas treatment device 1 of this embodiment, however, the second filter 12 capable of decomposing ozone is disposed closer to the exhaust port 7 than the excimer lamp 3, i.e., downstream, so that the ozone contained in the gas to be treated G1 can be decomposed by this second filter 12. After passing through the second filter 12, the gas to be treated G1 is exhausted from the exhaust port 7 as a treated gas G2.

<<Validation>>

The following tests were conducted to illustrate the effects of the gas treatment device 1 of this embodiment.

First, before introduction of a gas to be treated G1, the excimer lamp 3 was turned on, with an input power of 26.4 W from the lamp power source, and the illuminance on the surface of the arc tube 30 at point A in the middle in the direction d1 was measured with an illuminometer.

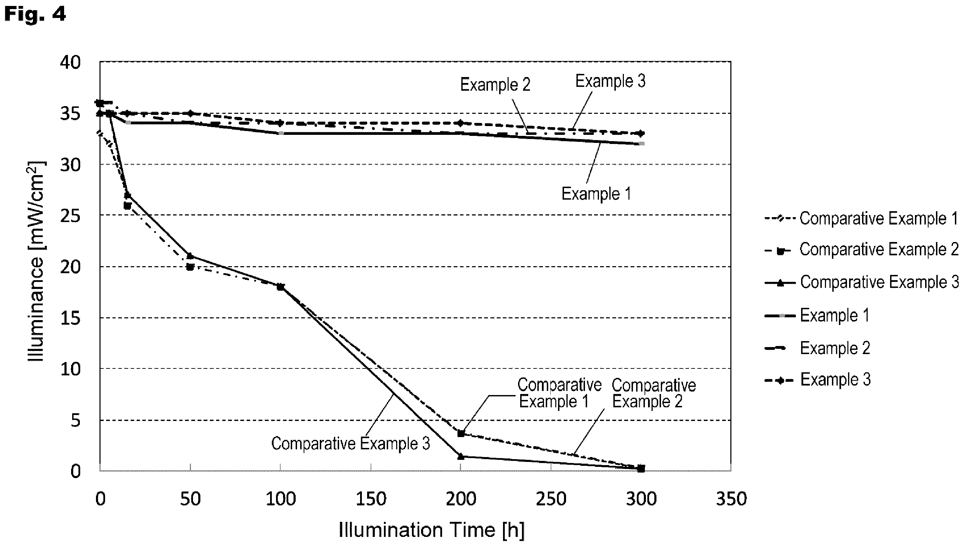

Next, air containing 10 ppm of xylene as a first substance Z1 that belongs to VOCs was introduced as the gas to be treated G1 from the intake port 6 into the treatment chamber 2 in a flow amount of 1000 L/min, and treated for a predetermined time, after which the illuminance at the point A was measured with an illuminometer. The changes with time in the illuminance are shown in Fig. 4.

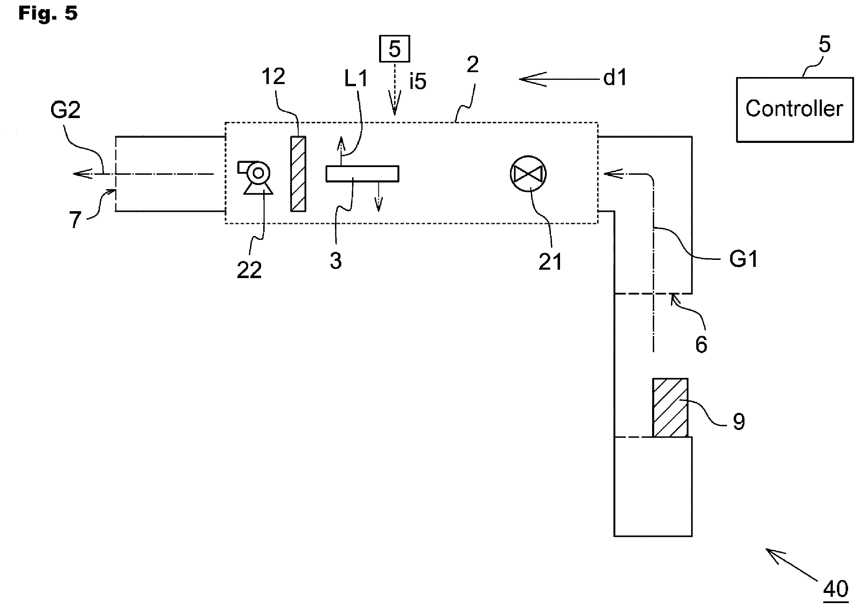

In Fig. 4, Examples 1 to 3 all represent cases where treatment was performed to the gas to be treated G1 using the gas treatment device 1 illustrated in Fig. 1. The test was conducted several times under the same conditions to show the reproducibility of the results. In Fig. 4, Comparative Examples 1 to 3 all represent cases where treatment was performed to the gas to be treated G1 using a gas treatment device 40 illustrated in Fig. 5. The test was conducted several times under the same conditions to show the reproducibility of the results. The gas treatment device 40 that is Comparative Example 1 illustrated in Fig. 5 has the same elements as those of the gas treatment device 1 of Example 1 illustrated in Fig. 1, except that the first filter 11 is removed.

Fig. 4 indicates that the illuminance on the surface of the arc tube 30 declined largely as the processing time passes in the case with Comparative Examples 1 to 3. In contrast, it is seen that the illuminance on the surface of the arc tube 30 hardly declined even after continuous treatment of the gas to be treated G1 in Examples 1 to 3.

The inventor discusses the reason for this as follows.

Xylene, as a first substance Z1 that belongs to VOCs, readily forms a secondary organic aerosol (SOA) when irradiated with ultraviolet L1 from the excimer lamp 3. In the gas treatment device 40 of Comparative Example 1 illustrated in Fig. 5, the gas to be treated G1 containing xylene is guided toward the excimer lamp 3, and irradiated with the ultraviolet L1 from this excimer lamp 3. It is assumed that this resulted in formation of SOA, or secondary particles, from xylene, which adhered to the wall surface of the arc tube 30 of the excimer lamp 3, leading to the decline in the illuminance of the ultraviolet L1.

In contrast, the gas treatment device 1 of Example 1 includes the first filter 11 upstream of the excimer lamp 3 so that xylene contained in the gas to be treated G1 is adsorbed and removed by this first filter 11. Since the gas to be treated G1 guided toward the excimer lamp 3 contains a reduced concentration of xylene, there is hardly any xylene to form secondary particles when the gas to be treated G1 is irradiated with ultraviolet L1. It is therefore considered that the absence of secondary particles adhering on the wall surface of the arc tube 30 prevents the decline of illuminance of ultraviolet L1.

Air containing xylene as the first substance Z1 that belongs to VOCs and formaldehyde as the second substance Z2 was introduced as the gas to be treated G1 into both of the gas treatment device 1 of Example 1 and the gas treatment device 40 of Comparative Example 1, and the treatment was performed similarly to the process described above. It was confirmed that, while the illuminance of the ultraviolet L1 reduced with time in the gas treatment device 40 of Comparative Example 1, the decline in the illuminance of ultraviolet L1 was inhibited in the gas treatment device 1 of Example 1, similarly to the results shown in Fig. 4.

[Second Embodiment]

A second embodiment of the gas treatment device according to the present invention will be described, mainly centering on the points different from the first embodiment.

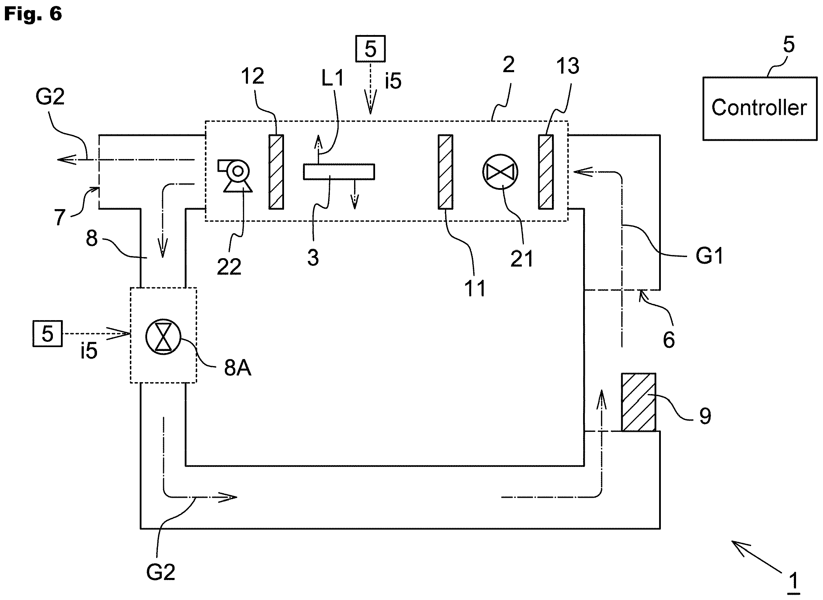

The gas treatment device 1 illustrated in Fig. 6 is different in that it includes a circulation flow path 8, as compared to the first embodiment. The circulation flow path 8 is a flow path for introducing the gas to be treated G1 after having been treated in the treatment chamber 2 (treated gas G2) again into the intake port 6. In the example illustrated in Fig. 6, the circulation flow path 8 includes a valve 8A, whose degree of opening can be controlled based on the control signal i5 from the controller 5. The degree of opening of this valve 8A is adjusted so that the treated gas G2 is introduced into the circulation flow path 8, or not, and/or the flow amount of the treated gas is adjusted.

Although not illustrated in Fig. 6, the gas treatment device 1 of this embodiment may further include a blower inside the circulation flow path 8 for adjusting the flow amount.

As illustrated in Fig. 6, the gas treatment device 1 of this embodiment includes a third filter 13 closer to the intake port 6 than the first filter 11, i.e., upstream, inside the treatment chamber 2. This third filter 13 is provided for the purpose of removing dust contained in the gas to be treated G1, and may be a medium efficiency particulate air filter. With the third filter 13, even when the gas to be treated G1 contains dust, it is less likely that the first filter 11, which is provided for the purpose of adsorbing the first substance Z1 belonging to VOCs in the gaseous form, loses the capability of adsorbing the first substance Z1, which may be caused by adhesion of dust on the first filter 11. The third filter also reduces the possibility of some dust passing through the first filter 11 and adhering to the wall surface of the arc tube 30 of the excimer lamp 3, which would cause a decline in the illuminance of the ultraviolet L1.

As described above, irradiation of the gas to be treated G1 with ultraviolet L1 produces ozone ($O_3$). The ozone

($O_3$) that was not used for the decomposition of VOCs stays in the gas to be treated G1 and is guided toward the exhaust port 7. Since the second filter 12 for decomposition of ozone is disposed downstream of the excimer lamp 3 as described above, the treated gas G2 after passing through the second filter 12 contains a reduced concentration of ozone.

Even so, it is possible that the ozone ($O_3$) contained in the gas to be treated G1 could not completely be removed by the second filter 12 and that the treated gas G2 still contains some ozone ($O_3$). In such a case, when the treated gas G2 is introduced into the intake port 6 again as a gas to be treated G1 through the circulation flow path 8 as in the gas treatment device 1 of this embodiment, the ozone may damage the third filter 13 when the gas to be treated G1 containing ozone passes through the third filter 13. From this viewpoint, the third filter 13 should preferably be an ozone-resistant filter. A non-woven fabric filter made of polyester fiber, fluoride fiber, glass fiber, and the like may be used as this filter.

[Other embodiments]

Other embodiments are described below.

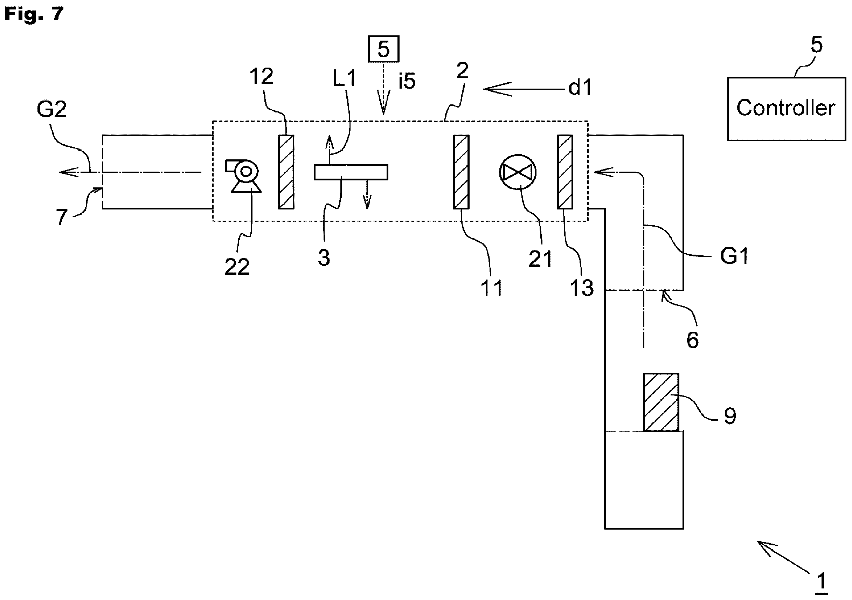

<1> The gas treatment device 1 of the first embodiment may include a third filter 13 for removing dust, as illustrated in Fig. 7.

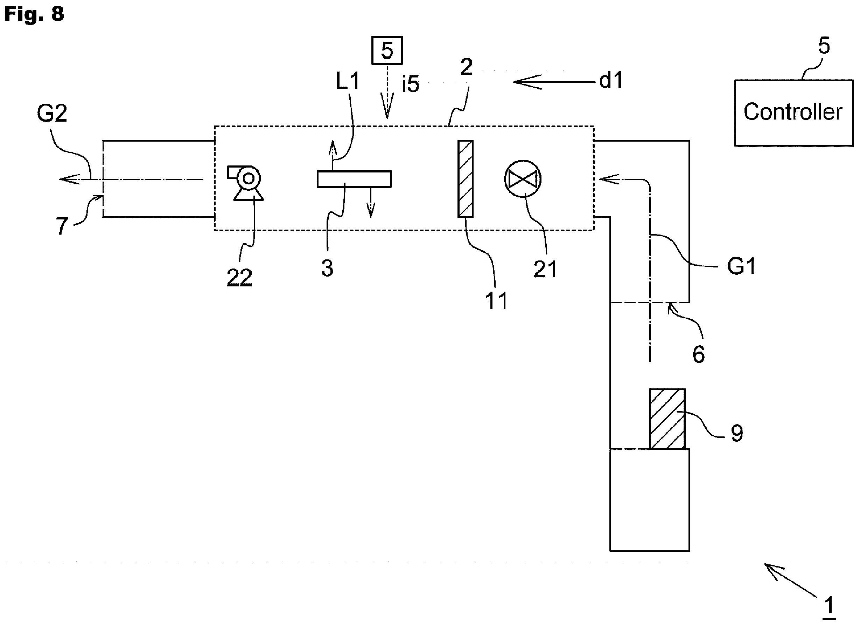

The gas treatment device 1 may not include the second filter 12 inside the treatment chamber 2, as illustrated in Fig. 8. If, for example, a means for decomposing ozone is disposed downstream of the exhaust port 7, or if the concentration of ozone to be generated inside the treatment chamber 2 is expected to be less than a reference value, the second filter 12 need not necessarily be provided.

<2> In the embodiments described above, the excimer lamp 3 includes an arc tube 30 hermetically filled with a discharge gas containing Xe. In this case, as mentioned above, the excimer lamp 3 emits ultraviolet L1 having a peak wavelength at around 172 nm. Irradiation of the gas to be treated G1 with this ultraviolet L1 causes the reactions expressed by Formulas (2) and (3) mentioned above, generating highly reactive hydroxyl radicals ($\cdot OH$), which decompose the second substance Z2 that belongs to VOCs.

As mentioned above, the wavelength of the ultraviolet L1 may be changed by using a different kind of discharge gas sealed in the arc tube 30 of the excimer lamp 3. The reaction expressed by Formula (2) above readily occurs when the wavelength $\lambda$ of the ultraviolet L1 is 180 nm or less, in particular. On the other hand, when the wavelength $\lambda$ of the ultraviolet L1 is longer than 180 nm, a reaction expressed by the following Formula (2a), rather than Formula (2), occurs more readily.

$$O_2 + hv(\lambda) \rightarrow O(^3P) + O(^3P) \ .... \qquad (2_a)$$

Oxygen atoms $O(^3P)$ generated by the reaction expressed by this Formula (2a) react with the oxygen ($O_2$) contained in the gas to be treated G1 and generate ozone ($O_3$) by the reaction expressed by the Formula (4) above.

Namely, if the second substance Z2 belonging to VOCs and contained in the gas to be treated G1 is a substance that can be decomposed by ozone ($O_3$), the excimer lamp 3 may be configured to emit ultraviolet L1 having a peak wavelength of longer than 180 nm. Any first substance Z1 belonging to VOCs and contained in the gas to be treated G1 is removed by the first filter 11, while the second substance Z2 is decomposed and removed by the ozone, in such a configuration, too.

Since the first substance Z1 having a high aerosol formation potential is removed by the first filter 11 before the ultraviolet L1 irradiation, adhesion of secondary particles on the surface of the arc tube 30 of the excimer lamp 3 is inhibited.

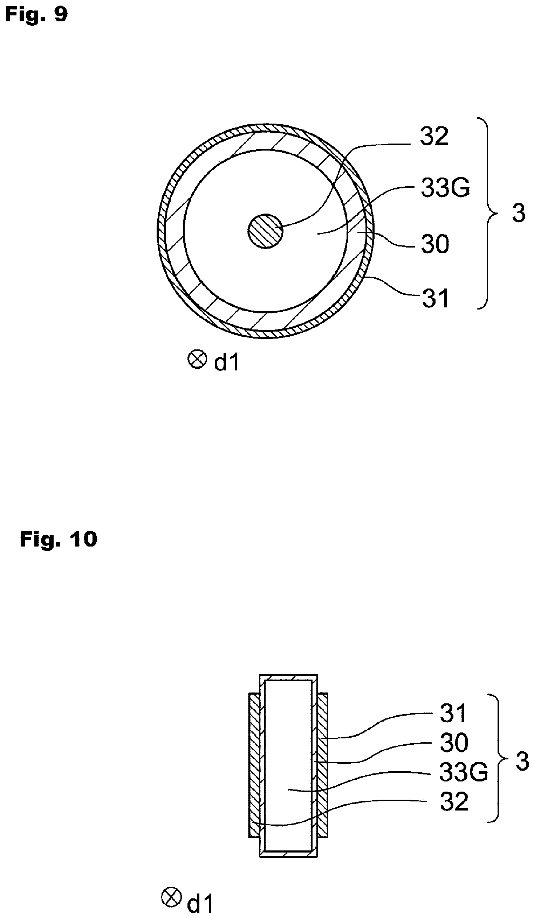

<3> The configuration of the excimer lamp 3 is not limited to the form illustrated in Fig. 3. The lamp may have a shape such as the one illustrated in Fig. 9 or Fig. 10, for example. Fig. 9 and Fig. 10 are schematic cross-sectional views of excimer lamps 3 of respective gas treatment devices 1 of different embodiments cut in a plane orthogonal to the direction d1 similarly to Fig. 3.

The excimer lamp 3 illustrated in Fig. 9 has one arc tube 30 extending along the direction d1. The first electrode 31 is set on the outer wall surface of the arc tube 30, in the form of a mesh or wire. A discharge gas 33G is sealed inside the arc tube 30, where the second electrode 32 is disposed.

The excimer lamp 3 illustrated in Fig. 10 includes an arc tube 30 having two opposite surfaces when viewed along the direction d1. The first electrode 31 is disposed on one wall surface of the arc tube 30, while the second electrode 32 is disposed on the other wall surface on the opposite side. The first electrode 31 and second electrode 32 have a mesh or wire form so as not to inhibit emission of the ultraviolet L1 generated inside the arc tube 30 out of the arc tube 30.

<4> In the embodiments described above, the excimer lamp 3 is configured to have an arc tube 30 arranged longitudinally along the direction d1 in which the gas to be treated G1 flows. How the excimer lamp 3 is disposed inside the treatment chamber 2 is not limited to a specific form in the present invention. For example, the arc tube 30 of the excimer lamp 3 may be arranged orthogonally to the direction d1 in which the gas to be treated G1 flows. In this case, the gas treatment device 1 may include a plurality of excimer lamps 3 inside the treatment chamber 2.

There may also be a plurality of excimer lamps 3 inside the treatment chamber 2, with the arc tube 30 being arranged longitudinally along the direction d1 in which the gas to be treated G1 flows.

**Claims**

1.  A gas treatment device (1) performing a treatment to a gas to be treated (G1) that is a mixture of air and a VOC flowing through a treatment chamber (2), the device (1) comprising:

    an intake port (6) allowing the gas to be treated (G1) to be introduced into the treatment chamber (2);
    an exhaust port (7) allowing the gas to be treated (G1) to be exhausted after being treated inside the treatment chamber (2);
    a first filter (11) disposed inside the treatment chamber (2) and configured to be able to adsorb a first substance belonging to VOCs in a gaseous form; and
    an excimer lamp (3) disposed closer to the exhaust port (7) than the first filter (11) inside the treatment chamber (2) and irradiating the gas to be treated (G1) with ultraviolet (L1) after the gas to be treated (G1) has passed through the first filter (11) to allow a second substance belonging to VOCs to be decomposed,
    the first substance having a higher adsorbability to the first filter (11) in a gaseous form and a higher aerosol formation potential when irradiated with the ultraviolet (L1) than the second substance.

2.  The gas treatment device (1) according to claim 1, wherein
    the first substance either contains a phenyl group or belongs to alkyl chlorides, and
    the second substance belongs to any one of the group consisting of alcohols, ketones, aldehydes, and epoxides.

3.  The gas treatment device (1) according to claim 1, wherein
    the first substance is one or more of substances included in the group consisting of toluene, xylene, styrene, ethyl benzene, chloroform, and carbon tetrachloride, and
    the second substance is a substance belonging to the group consisting of formaldehyde, ethylene oxide, methanol, isopropyl alcohol, acetone, methyl ethyl ketone, and methyl isobutyl ketone.

4.  The gas treatment device (1) according to any one of claims 1 to 3, wherein the excimer lamp (3) includes an arc tube (30) hermetically filled with a discharge gas (33G) containing Xe and arranged longitudinally along a direction in which the gas to be treated (G1) flows.

5.  The gas treatment device (1) according to any one of claims 1 to 4, further comprising a second filter (12) disposed closer to the exhaust port (7) than the excimer lamp (3) inside the treatment chamber (2) and capable of decomposing ozone.

6.  The gas treatment device (1) according to claim 5, further comprising an ozone-resistant third filter (13) disposed closer to the intake port (6) than the first filter (11) inside the treatment chamber (2) and capable of adsorbing dust contained in the gas to be treated (G1).

7.  The gas treatment device (1) according to claim 6, further comprising a circulation flow path (8) that introduces at least part of the gas to be treated (G1) that has passed through the second filter (12) to a point between the third filter (13) and the intake port (6).

**Fig. 1**

EP 3 747 529 A1

**Fig. 2**

d1

35    L1    3 (30)

G2    G1

2

**Fig. 3**

32

30b (30)

33G

3

30a (30)

31

⊗ d1

Fig. 4

**Fig. 5**

**Fig. 6**

EP 3 747 529 A1

**Fig. 7**

EP 3 747 529 A1

Fig. 8

**Fig. 9**

**Fig. 10**

**Fig. 11**

Europäisches
Patentamt

European
Patent Office

Office européen
des brevets

# EUROPEAN SEARCH REPORT

**Application Number**

EP 20 17 5333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/080981 A2 (INFUSER IP APS [DK]) 2 May 2019 (2019-05-02) * pages 1, 3-6 * * pages 10-17 * * pages 21-25 * * figure 6 * | 1-7 | INV. B01D53/00 B01D53/04 B01D53/22 |
| X | JP 2011 056191 A (UNIV KYUSHU) 24 March 2011 (2011-03-24) | 1-7 | |
| Y | * paragraphs [0018] - [0020], [0023] * * figure 1; example 5 * * example 2 * | 1-7 | |
| Y | US 8 529 831 B1 (HO WING KEI [HK] ET AL) 10 September 2013 (2013-09-10) * figure 1 * * column 2, lines 35-44 * * column 3, lines 4-19, 41-43 * | 1-7 | |
| Y | US 2018/230011 A1 (NAITO KEISUKE [JP] ET AL) 16 August 2018 (2018-08-16) * figures 1-2 * * paragraphs [0001], [0017], [0019], [0021], [0038] * * paragraphs [0050], [0056] - [0057] * * paragraphs [0076], [0079], [0081], [0101] * | 1-7 | TECHNICAL FIELDS SEARCHED (IPC) B01D |
| A | DE 43 07 204 A1 (UNIV SCHILLER JENA [DE]) 15 September 1994 (1994-09-15) * column 1, lines 1-2 * * columns 2-62 * * column 3, lines 4-10 * * figure 2 * | 1-7 | |

The present search report has been drawn up for all claims

| Place of search | Date of completion of the search | Examiner |
|---|---|---|
| Munich | 30 October 2020 | Marchand, Karin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 20 17 5333

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | | Publication date | Patent family member(s) | | Publication date |
|---|---|---|---|---|---|
| WO 2019080981 | A2 | 02-05-2019 | AU | 2018355568 A1 | 11-06-2020 |
| | | | CA | 3080238 A1 | 02-05-2019 |
| | | | CN | 111278472 A | 12-06-2020 |
| | | | EP | 3700587 A2 | 02-09-2020 |
| | | | KR | 20200091404 A | 30-07-2020 |
| | | | WO | 2019080981 A2 | 02-05-2019 |
| JP 2011056191 | A | 24-03-2011 | NONE | | |
| US 8529831 | B1 | 10-09-2013 | CN | 102811794 A | 05-12-2012 |
| | | | EP | 2651536 A1 | 23-10-2013 |
| | | | HK | 1176031 A1 | 19-07-2013 |
| | | | US | 8529831 B1 | 10-09-2013 |
| | | | WO | 2012079539 A1 | 21-06-2012 |
| US 2018230011 | A1 | 16-08-2018 | CN | 107922189 A | 17-04-2018 |
| | | | JP | 6070794 B1 | 01-02-2017 |
| | | | JP | 2017043513 A | 02-03-2017 |
| | | | KR | 20180031069 A | 27-03-2018 |
| | | | US | 2018230011 A1 | 16-08-2018 |
| | | | WO | 2017033727 A1 | 02-03-2017 |
| DE 4307204 | A1 | 15-09-1994 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018089106 A